# EUROPÄISCHE PATENTSCHRIFT

(11) **EP 2 772 378 B1**
(45) Veröffentlichungstag und Bekanntmachung des Hinweises auf die Patenterteilung: **19.07.2017**
(21) Anmeldenummer: 14154815.6
(22) Anmeldetag: 12.02.2014
(51) Int. Cl.: B60K 7/00, B60K 17/04, B64F 1/22, B60K 1/02

(54) **Doppelrad-Antriebsmodul**
Double wheel drive module
Module d'entraînement à double roue

(30) Priorität: 01.03.2013 DE 102013203567
(43) Veröffentlichungstag der Anmeldung: 03.09.2014
(73) Patentinhaber: Siemens Aktiengesellschaft, 80333 München (DE)
(72) Erfinder: Lang, Hans-Peter, 90542 Eckental/Brand (DE); Oehler, Thomas, 09114 Chemnitz (DE)

(56) Entgegenhaltungen:
- EP-A2- 1 329 352
- EP-A2- 1 650 055
- WO-A1-98/40235
- DE-A1- 19 945 345
- DE-A1-102010 001 750
- DE-A1-102010 017 966

## Beschreibung

Die vorliegende Erfindung betrifft ein Doppelrad-Antriebsmodul zum Antreiben von zwei um miteinander fluchtende Drehachsen drehbaren, axial voneinander beabstandet angeordneten Fahrzeugrädern, die im bestimmungsgemäßen Zustand an dem Doppelrad-Antriebsmodul befestigt sind.

Doppelrad-Antriebsmodule der eingangs genannten Art sind im Stand der Technik in unterschiedlichen Ausgestaltungen bekannt. Sie werden normalerweise für Schwerlastfahrzeuge eingesetzt, wie beispielsweise für Flugfeldschlepper oder dergleichen. Gemäß einer bekannten Variante verfügt das Doppelrad-Antriebsmodul über eine hydrostatische Antriebseinheit, die von einer Antriebsmaschine angetrieben wird, wie beispielsweise über einen Verbrennungsmotor. Die hydrostatische Antriebseinheit umfasst üblicherweise eine oder mehrere von der Antriebsmaschine angetriebene Hydraulikpumpen und zwei damit verbundene Hydraulikmotoren, die im bestimmungsgemäßen Zustand jeweils eines der an dem Doppelrad-Antriebsmodul gehaltenen Fahrzeugräder antreibt. Ein beispielhafter Aufbau einer solchen hydrostatischen Antriebseinheit ist beispielsweise in der DE 10 2011 116 528 A1 offenbart. Zwischen den Hydraulikmotoren und den Fahrzeugrädern kann gegebenenfalls ein Planetengetriebe angeordnet sein, an dem die Fahrzeugräder direkt befestigt sind, um eine entsprechende Untersetzung zu realisieren.

Ein gattungsgemäßes Doppelrad-Antriebsmodul ist z.B. aus der WO 98/40235 A1 bekannt.

Weitere Antriebsmodule sind in den Druckschriften EP 1 329 352 A2, DE 10 2010 00 1750 A1, DE 199 45 345 A1, EP 1 650 055 A2 und DE 10 2010 017 966 offenbart.

Ausgehend von diesem Stand der Technik ist es eine Aufgabe der vorliegenden Erfindung, ein Doppelrad-Antriebsmodul der eingangs genannten Art zu schaffen, das einen alternativen Aufbau aufweist, einen hohen Wirkungsgrad hat und mit niedrigen Wartungs- und Instandhaltungskosten einhergeht.

Zur Lösung dieser Aufgabe schafft die vorliegende Erfindung ein Doppelrad-Antriebsmodul der eingangs genannten Art, bei dem zum Antreiben des ersten Fahrzeugrads ein erster Traktionsmotor, dessen Motorwelle parallel zu den Drehachsen angeordnet ist, ein erstes Getriebe, dessen Eingangswelle mit der Motorwelle des ersten Traktionsmotors verbunden ist und dessen Ausgangswelle mit den Drehachsen fluchtet, und ein zweites Getriebe vorgesehen sind, dessen Eingangswelle mit der Ausgangswelle des ersten Getriebes verbunden ist und dessen um eine gemeinsame Drehachse mit der Eingangswelle drehende Ausgangswelle zur Aufnahme des ersten Fahrzeugrads ausgebildet ist, und bei dem zum Antreiben des zweiten Fahrzeugrads ein zweiter Traktionsmotor, dessen Motorwelle parallel zu den Drehachsen angeordnet ist; ein drittes Getriebe, dessen Eingangswelle mit der Motorwelle des zweiten Traktionsmotors verbunden ist und dessen Ausgangswelle mit den Drehachsen fluchtet; und ein viertes Getriebe vorgesehen sind, dessen Eingangswelle mit der Ausgangswelle des dritten Getriebes verbunden ist und dessen um eine gemeinsame Drehachse mit der Eingangswelle drehende Ausgangswelle zur Aufnahme des zweiten Fahrzeugrads ausgebildet ist, wobei der erste Traktionsmotor und der zweite Traktionsmotor in Richtung der Drehachsen der Fahrzeugräder betrachtet V-förmig angeordnet sind.

Erfindungsgemäß kommen anstelle der bekannten Hydraulikmotoren also zwei Traktionsmotoren zum Einsatz, die im bestimmungsgemäßen Zustand jeweils eines der am Doppelrad-Antriebsmodul angeordneten Fahrzeugräder antreiben. Die Motorwellen der Traktionsmotoren sind jeweils parallel und somit mit Abstand zu den Drehachsen der Fahrzeugräder angeordnet, um zwischen sich einen Aufnahmeraum für weitere an dem Doppelrad-Antriebsmodul zu befestigenden Komponenten zu schaffen, insbesondere für einen zentralen Hydraulikzylinder, über den im bestimmungsgemäß angeordneten Zustand des Doppelrad-Antriebsmoduls beispielsweise die Stoßdämpfung oder dergleichen realisiert wird. Um ein solche außermittige Anordnung der Traktionsmotoren zu erzielen, ist jeder Traktionsmotor mit einem Getriebe verbunden, dessen Eingangswelle mit der Motorwelle des entsprechenden Traktionsmotors verbunden ist und dessen Ausgangswelle mit der Drehachse des anzutreibenden Fahrzeugrads fluchtet. Mit jedem dieser Getriebe ist wiederum ein weiteres Getriebe verbunden, dessen Eingangswelle und Ausgangswelle miteinander fluchten, wobei die Ausgangswelle zur Aufnahme des anzutreibenden Fahrzeugrads ausgebildet ist. Beide pro Fahrzeugrad vorgesehenen Getriebe realisieren gemeinsam die gewünschte Untersetzung. Auf diese Weise wird ein sehr kompakt bauendes Doppelrad-Antriebsmodul geschaffen, das an einem Fahrzeugrahmen eines entsprechenden Fahrzeugs befestigt werden kann. Vorteilhaft sind die beiden Traktionsmotoren, das erste und das dritte Getriebe ebenso wie das zweite und das vierte Getriebe jeweils identisch ausgebildet, wodurch sich ein sehr einfacher Aufbau des Doppelrad-Antriebsmoduls ergibt. Ein weiterer Vorteil des erfindungsgemäßen Doppelrad-Antriebsmoduls besteht darin, dass dieses einen hohen Wirkungsgrad aufweist. Darüber hinaus sind die Wartungs- und Instandhaltungskosten sehr gering, da die Komponenten des Doppelrad-Antriebsmoduls dauerfest ausgelegt sind, weshalb lediglich ein Wechsel der Getriebewälzlager vorgesehen ist. Vorteilhaft ist ferner, dass gegenüber einer hydrostatischen Antriebseinheit die aufwendige Installation der Ölversorgung und die Ansteuerung der Hydraulikmotoren entfallen. Zudem können die elektrischen Traktionsmotoren als generatorische Betriebsbremse verwendet werden, was ein nahezu verschleißfreies Abbremsen des Fahrzeugs ermöglicht.

Die Traktionsmotoren sind bevorzugt als Asynchronmotoren vorgesehen, insbesondere als hochtourige Asynchronmotoren.

Gemäß einer Ausgestaltung der vorliegenden Erfindung handelt es sich bei dem ersten Getriebe und bei dem dritten Getriebe jeweils um ein Stirnradgetriebe, was zu einem kostengünstigen und robusten Aufbau führt.

Das erste Getriebe und das dritte Getriebe sind bevorzugt jeweils als Untersetzungsgetriebe ausgebildet, wobei das jeweilige Übersetzungsverhältnis i insbesondere zwischen 2 und 3 liegt.

Bei dem zweiten Getriebe und bei dem vierten Getriebe handelt es sich vorteilhaft jeweils um ein Planetengetriebe, was ebenfalls zu einem einfachen und kostengünstigen Aufbau führt.

Das zweite Getriebe und das vierte Getriebe sind bevorzugt jeweils als Untersetzungsgetriebe ausgebildet, wobei das jeweilige Übersetzungsverhältnis i insbesondere zwischen 15 und 20 liegt.

Gemäß einer bevorzugten Variante der vorliegenden Erfindung sind das erste Getriebe und das dritte Getriebe über einen Träger miteinander verbunden und bilden gemeinsam mit diesem eine Tragstruktur des Doppelrad-Antriebsmoduls, welche die Fahrzeugradkräfte im bestimmungsgemäß angeordneten Zustand des Doppelrad-Antriebsmoduls über das zweite Getriebe und das vierte Getriebe in das Fahrzeug einleitet. Ein wesentlicher Vorteil eines solchen Trägers, der das erste Getriebe mit dem dritten Getriebe verbindet, besteht darin, dass das Doppelrad-Antriebsmodul keinen separaten Modulrahmen benötigt.

Vorteilhaft ist an dem Träger eine Aufnahme für eine Gleitlagerung eines Längsbolzens vorgesehen, über den das Doppelrad-Antriebsmodul im bestimmungsgemäß angeordneten Zustand mit einem Fahrzeugrahmen verbunden ist. Auf diese Weise wird eine sehr einfache Anbindung des Doppelrad-Antriebsmoduls an ein Fahrzeug gewährleistet.

Der Längsbolzen und dessen Lagerung sind vorteilhaft derart ausgebildet, dass sie ein Kippen des Doppelrad-Antriebsmoduls um den Längsbolzen im Bereich von ±2° bis ±5° gestattet, was im bestimmungsgemäß angeordneten Zustand des Doppelrad-Antriebsmoduls einen Ausgleich von Fahrbahnunebenheiten ermöglicht.

Zwischen dem ersten Traktionsmotor und dem zweiten Traktionsmotor ist gemäß einer Ausgestaltung der vorliegenden Erfindung ein Hydraulikzylinder angeordnet, über den im bestimmungsgemäß angeordneten Zustand beispielsweise die Dämpfung, Federung und/oder Höhenverstellung des Fahrzeugs realisiert wird. Zur Anordnung des Hydraulikzylinders kann an der Oberseite des Querträgers eine im Wesentlichen gabelförmige Aufnahme ausgebildet sein, die zur Aufnahme und Befestigung des Hydraulikzylinders dient.

Erfindungsgemäß sind das erste Getriebe und das dritte Getriebe in Richtung der Drehachse der Fahrzeugräder betrachtet V-förmig angeordnet. Auf diese Weise wird ein sehr robuster und platzsparender Aufbau erzielt.

Ferner schafft die vorliegende Erfindung ein Schwerlastfahrzeug mit mehreren Doppelrad-Antriebsmodulen der zuvor beschriebenen Art, wobei es sich bei dem Schwerlastfahrzeug insbesondere um einen Flugfeldschlepper handelt.

Weitere Merkmale und Vorteile der vorliegenden Erfindung werden nachfolgend anhand der Beschreibung einer Ausführungsform eines erfindungsgemäßen Doppelrad-Antriebsmoduls unter Bezugnahme auf die beiliegende Zeichnung deutlich. Darin ist
- FIG 1: eine perspektivische Ansicht eines Doppelrad-Antriebsmoduls gemäß einer Ausführungsform der vorliegenden Erfindung und
- FIG 2: eine weitere perspektivische Ansicht des in Figur 1 dargestellten Doppelrad-Antriebsmoduls.

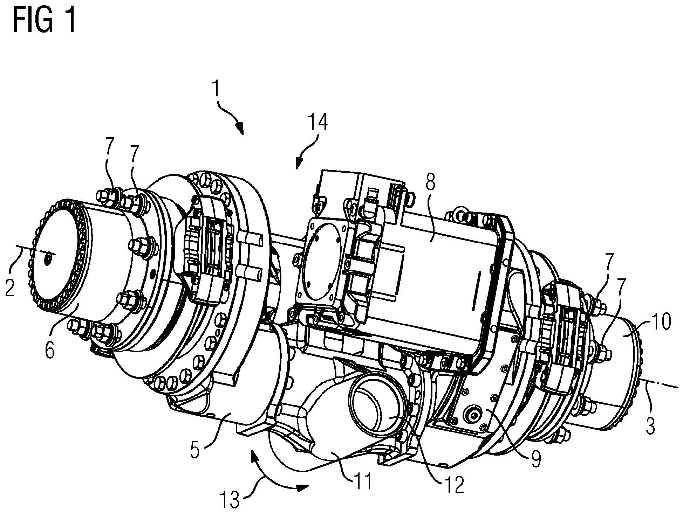

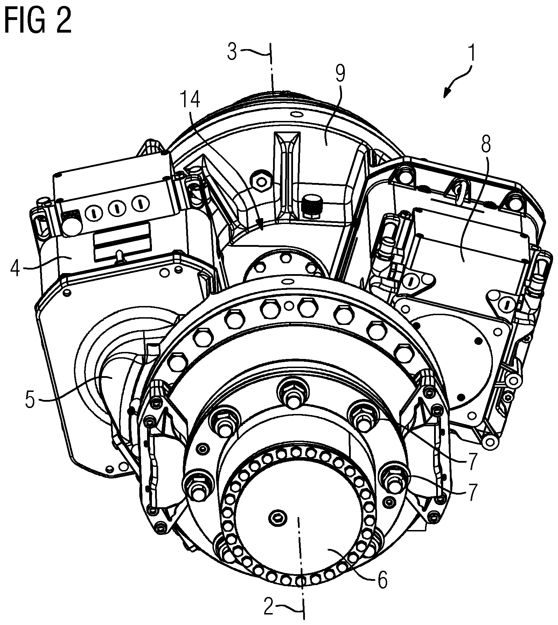

Die Figuren 1 und 2 zeigen ein Doppelrad-Antriebsmodul 1 gemäß einer Ausführungsform der vorliegenden Erfindung, das zum Antreiben von zwei um miteinander fluchtende Drehachsen 2 und 3 drehbaren, axial voneinander beabstandet angeordneten Fahrzeugrädern dient, die vorliegend nicht näher dargestellt sind.

Zum Antreiben des ersten Fahrzeugrads umfasst das Doppelrad-Antriebsmodul 1 einen ersten Traktionsmotor 4, ein erstes Getriebe 5 und ein zweites Getriebe 6. Bei dem Traktionsmotor handelt es sich um einen hochtourigen Asynchronmotor, dessen nicht näher dargestellte Motorwelle parallel zur Drehachse 2 des ersten Fahrzeugrads und von dieser beabstandet angeordnet ist. Bei dem ersten Getriebe 5 handelt es sich um ein Stirnradgetriebe, dessen Eingangswelle mit der Motorwelle des ersten Traktionsmotors 4 verbunden ist und dessen Ausgangswelle mit der Drehachse 2 des ersten Fahrzeugrads fluchtet. Das erste Getriebe 5 dient somit zum Ausgleich des Achsversatzes zwischen der Motorwelle des ersten Traktionsmotors 4 und der Drehachse 2, wobei gleichzeitig über das erste Getriebe 5 eine Untersetzung mit einem Übersetzungsverhältnis i = 2 realisiert wird. Bei dem zweiten Getriebe 6 handelt es sich um ein Planetengetriebe, dessen Eingangswelle mit der Ausgangswelle des ersten Getriebes 5 verbunden ist und dessen um eine gemeinsame Drehachse mit der Eingangswelle drehende Ausgangswelle zur Aufnahme des ersten Fahrzeugrads ausgebildet ist. Genauer gesagt wird die Felge des ersten Fahrzeugrads über die Schraubverbindungen 7 an der Ausgangswelle des zweiten Getriebes 6 festgelegt. Über das zweite Getriebe 6 wird eine weitere Untersetzung mit einem Übersetzungsverhältnis i = 15 erzielt, so dass das erste Getriebe 5 und das zweite Getriebe 6 insgesamt eine Übersetzung iges. = 30 realisieren.

Zum Antreiben des zweiten Fahrzeugrads umfasst das Doppelrad-Antriebsmodul 1 einen zweiten Traktionsmotor 8, ein drittes Getriebe 9 und ein viertes Getriebe 6, wobei der zweite Traktionsmotor 8 analog zum ersten Traktionsmotor 4, das dritte Getriebe 9 analog zum ersten Getriebe 5 und das vierte Getriebe 10 analog zum zweiten Getriebe 6 ausgebildet ist, weshalb auf eine erneute Erläuterung an dieser Stelle verzichtet wird.

Der erste Traktionsmotor 4 und der zweite Traktionsmotor 8 sind, wenn man das Doppelrad-Antriebsmodul in Richtung der Drehachsen 2 und 3 betrachtet, V-förmig angeordnet, wie es in Figur 2 zu erkennen ist, wobei ihre Motorwellen in entgegen gesetzte Richtungen weisen.

Das erste Getriebe 5 und das dritte Getriebe 9 sind über einen Träger 11 miteinander verbunden und bilden mit diesem die Tragstruktur des Doppelrad-Antriebsmoduls 1. An dem Träger 11 ist eine Aufnahme 12 für eine Gleitlagerung eines nicht näher dargestellten Längsbolzens vorgesehen, über den das Doppelrad-Antriebsmodul 1 im bestimmungsgemäß angeordneten Zustand mit einem Fahrzeugrahmen verbunden ist. Der Längsbolzen und dessen Gleitlagerung sind derart ausgebildet, dass sie ein Kippen des Doppelrad-Antriebsmoduls 1 um den Längsbolzen um ±3°gestatten, wie es in den Figuren durch den Doppelpfeil 13 angedeutet ist. An seiner Oberseite ist der Träger 11 mit einer im Wesentlichen gabelförmig ausgebildeten Aufnahme 14 versehen, die zur Aufnahme und Befestigung eines nicht näher dargestellten Hydraulikzylinders dient, über den beispielsweise die Dämpfung, Federung und/oder die Höheneinstellung des Fahrzeugs realisiert wird.

## Patentansprüche

1. Doppelrad-Antriebsmodul (1) zum Antreiben von zwei um miteinander fluchtende Drehachsen (2, 3) drehbaren, axial voneinander beabstandet angeordneten Fahrzeugrädern, die im bestimmungsgemäßen Zustand an diesem angeordnet sind, wobei
- zum Antreiben des ersten Fahrzeugrads ein erster Traktionsmotor (4), dessen Motorwelle parallel zu den Drehachsen (2, 3) angeordnet ist; ein erstes Getriebe (5), dessen Eingangswelle mit der Motorwelle des ersten Traktionsmotors (4) verbunden ist und dessen Ausgangswelle mit den Drehachsen (2, 3) fluchtet; und ein zweites Getriebe (6) vorgesehen sind, dessen Eingangswelle mit der Ausgangswelle des ersten Getriebes (5) verbunden ist und dessen um eine gemeinsame Drehachse mit der Eingangswelle drehende Ausgangswelle zur Aufnahme des ersten Fahrzeugrads ausgebildet ist, und
- zum Antreiben des zweiten Fahrzeugrads ein zweiter Traktionsmotor (8), dessen Motorwelle parallel zu den Drehachsen (2, 3) angeordnet ist; ein drittes Getriebe (9), dessen Eingangswelle mit der Motorwelle des zweiten Traktionsmotors (8) verbunden ist und dessen Ausgangswelle mit den Drehachsen (2, 3) fluchtet; und ein viertes Getriebe (10) vorgesehen sind, dessen Eingangswelle mit der Ausgangswelle des dritten Getriebes (9) verbunden ist und dessen um eine gemeinsame Drehachse mit der Eingangswelle drehende Ausgangswelle zur Aufnahme des zweiten Fahrzeugrads ausgebildet ist,
**dadurch gekennzeichnet, dass** der erste Traktionsmotor (4) und der zweite Traktionsmotor (8) in Richtung der Drehachsen (2, 3) der Fahrzeugräder betrachtet V-förmig angeordnet sind.

2. Doppelrad-Antriebsmodul (1) nach Anspruch 1,
**dadurch gekennzeichnet, dass** die Traktionsmotoren (4, 8) als Aynchronmotoren vorgesehen sind.

3. Doppelrad-Antriebsmodul (1) nach einem der vorhergehenden Ansprüche, **dadurch gekennzeichnet,**
**dass** es sich beim ersten Getriebe (5) und beim dritten Getriebe (9) jeweils um ein Stirnradgetriebe handelt.

4. Doppelrad-Antriebsmodul (1) nach einem der vorhergehenden Ansprüche, **dadurch gekennzeichnet,**
**dass** das erste Getriebe (5) und das dritte Getriebe (9) jeweils als Untersetzungsgetriebe ausgebildet sind, dessen Übersetzungsverhältnis (i) insbesondere zwischen 2 und 3 liegt.

5. Doppelrad-Antriebsmodul (1) nach einem der vorhergehenden Ansprüche, **dadurch gekennzeichnet,**
**dass** es sich beim zweiten Getriebe (6) und beim vierten Getriebe (10) jeweils um ein Planetengetriebe handelt.

6. Doppelrad-Antriebsmodul (1) nach einem der vorhergehenden Ansprüche, **dadurch gekennzeichnet,**
**dass** das zweite Getriebe (6) und das vierte Getriebe (10) jeweils als Untersetzungsgetriebe ausgebildet sind, dessen Übersetzungsverhältnis (i) insbesondere zwischen 15 und 20 liegt.

7. Doppelrad-Antriebsmodul (1) nach einem der vorhergehenden Ansprüche, **dadurch gekennzeichnet,**
**dass** das erste Getriebe (5) und das dritte Getriebe (9) über einen Träger (11) miteinander verbunden sind und gemeinsam mit diesem eine Tragstruktur des Doppelrad-Antriebsmoduls (1) bilden.

8. Doppelrad-Antriebsmodul (1) nach Anspruch 7,
**dadurch gekennzeichnet, dass** an dem Träger (11) eine Aufnahme (12) für eine Gleitlagerung eines Längsbolzens vorgesehen ist, über den das Doppelrad-Antriebsmodul (1) im bestimmungsgemäß angeordneten Zustand mit einem Fahrzeugrahmen verbunden ist.

9. Doppelrad-Antriebsmodul (1) nach Anspruch 8,
**dadurch gekennzeichnet, dass** der Längsbolzen derart ausgebildet ist, dass er ein Kippen des Doppelrad-Antriebsmoduls (1) um den Längsbolzen im Bereich von ±2° bis ±5° gestattet.

10. Doppelrad-Antriebsmodul (1) nach einem der vorhergehenden Ansprüche, **dadurch gekennzeichnet,**
**dass** zwischen dem ersten Traktionsmotor (4) und dem zweiten Traktionsmotor (8) ein Hydraulikzylinder angeordnet ist.

11. Schwerlastfahrzeug mit mehreren Doppelrad-Antriebsmodulen (1) nach einem der vorhergehenden Ansprüche, insbesondere Flugfeldschlepper.

## Claims

1. Twin-wheel drive module (1) for driving two vehicle wheels disposed spaced axially from one another, able to be rotated around two axes of rotation (2, 3) aligned with one another which, when the module is in its intended state, are disposed on said module, wherein
- for driving the first vehicle wheel, a first traction motor (4), of which the motor shaft is disposed in parallel to the axes of rotation (2, 3); a first transmission (5), of which the input shaft is connected to the motor shaft of the first traction motor (4) and of which the output shaft is aligned with the axes of rotation (2, 3); and a second transmission (6) are provided, of which the input shaft is connected to the output shaft of the first transmission (5) and of which the output shaft, rotating around a common axis of rotation with the input shaft, is embodied for accepting the first vehicle wheel, and
- for driving the second vehicle wheel, a second traction motor (8), of which the motor shaft is disposed in parallel to the axis of rotation (2, 3); a third transmission (9), of which the input shaft is connected to the motor shaft of the second traction motor (8) and of which the output shaft is aligned with the axes of rotation (2, 3); and a fourth transmission (10) are provided, of which the input shaft is connected to the output shaft of the third transmission (9) and of which the output shaft rotating around a common axis of rotation with the input shaft is embodied for accepting the second vehicle wheel,
**characterised in that** the first traction motor (4) and the second traction motor (8), viewed in the direction of the axes of rotation (2, 3) of the vehicle wheels, are disposed in a V shape.

2. Twin-wheel drive module (1) according to claim 1, **characterised in that** the traction motors (4, 8) are provided as asynchronous motors.

3. Twin-wheel drive module (1) according to one of the preceding claims, **characterised in that** the first transmission (5) and the third transmission (9) each involve spur gearing.

4. Twin-wheel drive module (1) according to one of the preceding claims, **characterised in that** the first transmission (5) and the third transmission (9) are each embodied as reduction gearing, of which the transmission ratio (i) especially lies between 2 and 3.

5. Twin-wheel drive module (1) according to one of the preceding claims, **characterised in that** the second transmission (6) and the fourth transmission (10) each involve planetary gearing.

6. Twin-wheel drive module (1) according to one of the preceding claims, **characterised in that** the second transmission (6) and the fourth transmission (10) are each embodied as reduction gearing, of which the transmission ratio (i) especially lies between 15 and 20.

7. Twin-wheel drive module (1) according to one of the preceding claims, **characterised in that** the first transmission (5) and the third transmission (9) are connected to each other via a carrier (11) and, together with said carrier, form a support structure of the twin-wheel drive module (1).

8. Twin-wheel drive module (1) according to claim 7, **characterised in that** a receptacle (12) is provided on the carrier (11) for sliding support of a longitudinal bolt, via which the twin-wheel drive module (1) disposed in its intended state is connected to a vehicle frame.

9. Twin-wheel drive module (1) according to claim 8, **characterised in that** the longitudinal bolt is embodied such that it permits the twin-wheel drive module (1) to tilt around the longitudinal bolt in a range of ±2° to ±5°.

10. Twin-wheel drive module (1) according to one of the preceding claims, **characterised in that** a hydraulic cylinder is disposed between the first traction motor (4) and the second traction motor (8).

11. Heavy-duty vehicle with a number of twin-wheel drive modules (1) according to one of the preceding claims, especially an airfield tractor.

## Revendications

1. Module (1) d'entraînement à double roue pour entraîner deux roues de véhicule tournant autour d'axes (2, 3) de rotation en alignement, à distance l'une de l'autre axialement et, dans un état conforme aux prescriptions, montées sur celui-ci, dans lequel
- pour entraîner la première roue du véhicule, il est prévu un premier moteur (4) de traction, dont l'arbre est parallèle aux axes (2, 3) de rotation, une première transmission (5) dont l'arbre d'entrée est relié à l'arbre du premier moteur (4) de traction et dont l'arbre de sortie est aligné sur les axes (2, 3) de rotation, et une deuxième transmission (6) dont l'arbre d'entrée est relié à l'arbre de sortie de la première transmission (5) et dont l'arbre de sortie, servant d'axe de rotation commun avec l'arbre d'entrée, est constitué pour recevoir la première roue du véhicule et
- pour l'entraînement de la deuxième roue du véhicule, il est prévu un deuxième moteur (8) de traction, dont l'arbre est parallèle aux axes (2, 3) de rotation, une troisième transmission (9) dont l'arbre d'entrée est relié à l'arbre du deuxième moteur (8) de traction et dont l'arbre de sortie est aligné sur les axes (2, 3) de rotation et une quatrième transmission (10) dont l'arbre d'entrée est relié à l'arbre de sortie de la troisième transmission (9) et dont l'arbre de sortie, tournant autour d'un axe de rotation commun avec l'arbre d'entrée, est constitué pour la réception de la deuxième roue du véhicule,
**caractérisé en ce que** le premier moteur (4) de traction et le deuxième moteur (8) de traction sont disposés en forme de V, considéré dans la direction des axes (2, 3) de rotation des roues du véhicule.

2. Module (1) d'entraînement à double roue suivant la revendication 1,
**caractérisé en ce que** les moteurs (4, 8) de traction sont prévus sous la forme de moteurs asynchrones.

3. Module (1) d'entraînement à double roue suivant l'une des revendications précédentes, **caractérisé en ce que** la première transmission (5) et la troisième transmission (9) sont respectivement des transmissions à engrenage droit.

4. Module (1) d'entraînement à double roue suivant l'une des revendications précédentes, **caractérisé en ce que** la première transmission (5) et la troisième transmission (9) sont constituées respectivement sous la forme d'engrenages réducteurs dont le rapport (i) de démultiplication est notamment compris entre 2 et 3.

5. Module (1) d'entraînement à double roue suivant l'une des revendications précédentes, **caractérisé en ce que** la deuxième transmission (6) et la quatrième transmission (10) sont respectivement un engrenage planétaire.

6. Module (1) d'entraînement à double roue suivant l'une des revendications précédentes, **caractérisé en ce que** la deuxième transmission (6) et la quatrième transmission (10) sont constituées respectivement sous la forme d'un engrenage réducteur, dont le rapport (i) de démultiplication est compris notamment entre 15 et 20.

7. Module (1) d'entraînement à double roue suivant l'une des revendications précédentes, **caractérisé en ce que** la première transmission (5) et la troisième transmission (9) sont reliées entre elles par un support (11) et forment, conjointement avec celui-ci, une structure porteuse du module (1) d'entraînement à double roue.

8. Module (1) d'entraînement à double roue suivant la revendication 7,
**caractérisé en ce que**, sur le support (11), est prévu un logement (12) pour un palier glissant d'un longeron, par lequel le module (1) d'entraînement à double roue est, dans l'état monté conformément aux prescriptions, relié au châssis du véhicule.

9. Module (1) d'entraînement à double roue suivant la revendication 8,
**caractérisé en ce que** le longeron est constitué de manière à autoriser un basculement du module (1) d'entraînement à double roue, autour du longeron, dans la plage de ±2° à ±5

10. Module (1) d'entraînement à double roue suivant l'une des revendications précédentes, **caractérisé en ce qu'**un vérin hydraulique est monté entre le premier moteur (4) de traction et le deuxième moteur (8) de traction.

11. Véhicule pour charge lourde comprenant plusieurs modules (1) d'entraînement à double roue suivant l'une des revendications précédentes, notamment remorqueur de terrain d'aviation.
